# EUROPEAN PATENT SPECIFICATION

(11) **EP 0 267 799 B1**
(45) Date of publication and mention of the grant of the patent: **18.08.1993**
(21) Application number: 87310026.7
(22) Date of filing: 12.11.1987
(51) Int. Cl.: C08J 5/18, B29C 61/00

(54) **Shrinkable polyester film**
Polyester-Schrumpffolie
Film rétractable de polyester

(30) Priority: 12.11.1986 JP 269251/86; 11.12.1986 JP 295590/86; 15.12.1986 JP 298427/86; 17.02.1987 JP 33731/87; 11.03.1987 JP 56236/87; 11.06.1987 JP 145753/87; 26.10.1987 JP 269765/87
(43) Date of publication of application: 18.05.1988
(60) Divisional application: 90116831.0
(73) Proprietor: DIAFOIL HOECHST CO., LTD, Bunkyo-ku Tokyo (JP)
(72) Inventor: Fukuda, Yujiro, Machida-shi Tokyo (JP); Utsumi, Shigeo B-311 Mitsubishi-Kasei, Yokohama-shi Kanagawa-ken (JP)
(74) Representative: Woods, Geoffrey Corlett

(56) References cited:
- EP-A- 0 210 646
- DE-B- 1 187 792
- GB-A- 825 549
- GB-A- 989 080
- JP-A-61 203 161
- US-A- 4 020 141

## Description

The present invention relates to a shrinkable polyester film, more particularly to a shrinkable polyester film suitable for labels for use on PET (polyethylene terephthalate) bottles or other bottles and for packaging.

Hitherto, as a shrinkable film for packaging or labelling, a polyvinyl chloride or polystyrene film has generally been used. However, polyvinyl chloride film has difficulties in disposal, that is polyvinyl chloride film has high combustion energy and generates harmful hydrogen chloride when it is burnt. Polystyrene film has poor resistance to weather. Accordingly, a film of another polymer which is suitable for the purposes mentioned above has been desired.

Characteristics necessary for a shrinkable film for packaging and labelling include sufficient shrinkage, resistance to solvents such as printing ink, a shrinking property such that wrinkles do not occur on the label during shrinking treatment and warm water-resistance such that wrinkles, slack and whitening do not occur in the warm water treatment carried out after the shrinking treatment of the film for sterilization of the bottle.

For the above-mentioned demands, it has been disclosed that a film having sufficient shrinkage and excellent heat sealing property can be obtained by monoaxially stretching a noncrystalline copolyester, a blend of a noncrystalline copolyester and a crystalline polyester or a blend of two or more crystalline polyesters in the machine direction or the transverse direction (refer to JP-A-57-42726(1982), JP-A-57-159618(1982) and JP-A-59-97175(1984)). However, even in such a film, satisfactory shrinking properties and warm water-resistance cannot be obtained, in particular satisfactory shrinking properties. Such a film is apt to wrinkle during shrinking treatment as compared to conventional films, for example of polyvinyl chloride. Thus the above films hitherto proposed have severe problems in practical use.

Furthermore, in recent years, it has been desired to use a shrinkable film on containers of various shapes, and different characteristics have been demanded corresponding to the properties of the various containers, particularly for widely used containers for soft drinks such as a PET bottle, a large glass bottle with a small mouth, a heat-resistant PET bottle and a non heat-resistant PET bottle. Accordingly, it has been desired to obtain a shrinkable polyester film which satisfies the respective characteristics.

The present invention provides a shrinkable polyester film which consists of:
(i) a polyester comprising not less than 50 mol% of ethylene terephthalate units and which has a birefringence of from 0.040 to 0.150, a shrinkage of not less than 40% in one of the machine direction and the transverse direction and a shrinkage of not more than 20% in the other of the said directions after 5 min treatment in an air oven at 100°C, a shrinkage of not less than 60% in one of the machine direction and the transverse direction and not more than 15% in the other of the said directions after 30 sec treatment in water at 85°C, and a heat of fusion of not less than 8.37 KJ/kg (2 cal/g),
   wherein the diol component of said polyester comprises from 50 to 97 mol% of ethylene glycol units and from 50 to 3 mol% of neopentyl glycol units, and
   wherein the dicarboxylic acid component of said polyester comprises terephthalic acid units or terephthalic acid units and isophthalic acid units in a molar ratio of from 50:50 to 95:5; and
(ii) optionally, inorganic particles.

The shrinkable polyester film of the present invention has excellent shrinking properties, resistance to warm water, breaking strength and colour tone and is suitable for use as a label.

The polyester constituting the shrinkable film of the present invention comprises not less than 50 mol%, preferably from 65 to 95 mol%, of ethylene terephthalate units. As the remaining constitutional units, one or more units other than ethylene terephthalate units, which comprise a dicarboxylic acid component and a diol component, may be present. As the dicarboxylic acid component other than terephthalic acid, oxalic acid, malonic acid, succinic acid, adipic acid, azelaic acid, sebacic acid, phthalic acid, isophthalic acid, naphthalenedicarboxylic acids and diphenyl ether dicarboxylic acid may be mentioned, and as the diol component other than ethylene glycol, neopentyl glycol, propylene glycol, trimethylene glycol, tetramethylene glycol, hexamethylene glycol, diethylene glycol, polyalkylene glycol and 1,4-cyclohexane dimethanol may be mentioned.

The polyester contains terephthalic acid units as the main dicarboxylic acid component, and contains 97 to 50 mol%, preferably 97 to 70 mol%, of ethylene glycol units and 3 to 50 mol%, preferably 3 to 30 mol%, of neopentyl glycol units as the diol component.

It is possible to increase the amorphous portion of the polyester containing neopentyl glycol units while holding the glass-transition temperature (T_{g}) and the melting point (Tₘ) thereof relatively high as compared to other polyesters. Accordingly, it is considered that the polyester used in the present invention can have the amorphous portion necessary for a shrinkable film as well as excellent heat-resistance.

The glass-transition temperature (T_{g}) of the polyester containing neopentyl glycol units is preferably not lower than 65°C, more preferably not lower than 70°C. Since a film produced from a polyester having a T_{g} of below 65°C has poor heat-resistance, it is apt to distort in the periphery of the heat-sealed part after shrinking. Accordingly such a polyester is not desirable.

The polyester may be formed by polymerization of the major starting material comprising terephthalic acid and isophthalic acid in a molar ratio of from 50:50 to 95:5 with ethylene glycol, as the major constituting component.

In the polycondensation reaction in the production of the polyester used in the present invention, any catalyst employed in conventional methods may be used. An antimony compound such as antimony trioxide, antimony trichloride, antimony acetate or antimony glycollate; a germanium compound such as germanium dioxide or germanium glycollate; and a titanium compound such as titanium tetrapropoxide or titanium tetrabutoxide are usually used.

The antimony compound is greatly preferred as the catalyst since the molten thermal stability of the polyester obtained is excellent.

Furthermore, it is particularly preferable, in order to improve the molten thermal stability of the polyester, that the polyester does not contain any metal compound which is soluble in the polyester, except for the antimony compound used as the polycondensation catalyst.

The amount of such a polycondensation catalyst is preferably from 200 to 700 ppm, more preferably from 200 to 500 ppm, relative to the amount of the polyester. When the amount of the catalyst is below 200 ppm, the polycondensation reaction rate becomes extremely low. Thus an amount of catalyst below 200 ppm is not preferred.

The molten thermal stability of the polyester can be extremely improved by using the above method, and, furthermore, in the process of making the thus produced polyester into films, the generation of sublimed material is minimized. Thus films having excellent colour tone are obtainable.

In general, the intrinsic viscosity of the polyester is preferably not less than 0.50, more preferably not less than 0.60 and particularly preferably not less than 0.65. In the case where the intrinsic viscosity is below 0.50, the degree of crystallinity of the polyester is high and the shrinkage of a film produced from such a polyester is lowered. Accordingly such a case is not preferred.

A method for producing the film according to the present invention is now described.

After drying the polyester, in which inorganic particles have been contained to impart a slipping property to the film, under the same conditions as those for drying the usual polyethylene terephthalate or a copolymer thereof, the thus dried polyester is extruded into an unstretched film. The thus obtained unstretched film is monoaxially stretched in the machine direction or the transverse direction.

As the method of stretching, not only the method of monoaxially stretching in the machine direction by rolls and the method of monoaxially stretching in the transverse direction by a tenter can be used. It is also possible to employ a known biaxial stretching in which the film is stretched strongly in one direction (the machine direction or the transverse direction) and stretched weakly in the other direction. After heat-setting the thus obtained film at a temperature of not higher than 120°C, as occasion demands, the thus treated film is wound up as the product.

The thickness of the thus obtained film is not particularly limited. However, the preferred thickness is from 2 to 500 µm, more preferably from 5 to 300µm.

The preferred birefringence of the film of the present invention is from 0.040 to 0.120, more preferably from 0.040 to 0.100. A film having a birefringence below 0.040 has extremely poor solvent-resistance, and in the case where sterilization by warm water is carried out after applying such a film onto a bottle, the warm water-resistance of the film is extremely poor, and film whitens after sterilization and wave-like wrinkles and slack occur on the film.

In order to use the film of the present invention as a shrinkable film, the shrinkage of the film in one of the machine direction and the transverse direction (the main shrinking direction) is not less than 40%, more preferably not less than 50% and most preferably not less than 65%, after treating the film for 5 min in an air oven at 100°C. The shrinkage of the film in the other direction is not more than 20%, more preferably not more than 15%.

The film particularly suitable as a shrinkable film for large glass bottles has a shrinkage in the main shrinking direction of not less than 65% and a shrinkage in the other direction of not more than 15%. These shrinkages are converted into respective shrinkages of not less than 60% and not more than 15% after treating the film for 30 s in water at 85°C.

A film having a shrinkage in the main shrinking direction of less than 40% is unsuitable for that purpose in the case where the shrinkage in the other direction is over 20% because of consequential deformation of a drawing or letters printed on the film.

The shrinkage in the main shrinking direction of the film according to the present invention after printing a drawing and letters thereon is not less than 40% and preferably not less than 50% after 5 min treatment in an air oven at 100°C. In the case where the shrinkage in the main shrinking direction is below 40% after printing a drawing or letters thereon using a usual solvent for a printing ink, for instance a mixed solvent of methyl ethyl ketone and ethyl acetate, the thus treated film does not closely adhere to the curved part of the bottle. This is undesirable.

The heat of fusion of the film according to the present invention is not less than 8.37 kJ/kg (2 cal/g), more preferably not less than 16.74 kJ/kg (4 cal/g) and particularly preferably not less than 20.93 kJ/kg (5 cal/g). When the heat of fusion is below 8.37 kJ/kg (2 cal/g) the drying method usually used for polyethylene terephthalate cannot be adopted in the step before extruding the unstretched film. Accordingly, it is necessary to install a new type of drier. Since such an installation increases costs, a film having a heat of fusion of below 8.37 kJ/kg (2 cal/g) is unsuitable for the purpose of the present invention.

It is preferable that the film haze of the film according to the present invention is not more than 20%, more preferably not more than 15% and most preferably not more than 10% after immersing the film for 30 min in water at 85° under a tensioned and fixed condition. The shrinkable film for use in labelling may be subjected to sterilization together with the bottle which is labelled by the film using water at from 80 to 90°. A film which has a film haze of over 20% after the warm water treatment has whitening and blur, which reduces the transparency of the film. Accordingly such a film is undesirable.

It is preferable that the unevenness of the thickness of the film according to the present invention in the machine direction and in the transverse direction is not more than 30%, more preferably not more than 20% and most preferably not more than 15%. Shrinkable polyester films are generally said to have the defect that wrinkles form in the film after a shrinking treatment of passing the film through a shrink tunnel, as compared to a conventional shrinkable film of, for example, polyvinyl chloride. However, the above-mentioned defect is remarkably improved by controlling the unevenness of the thickness of the shrinkable polyester film both in the machine direction and in the transverse direction to much smaller than the level of the unevenness of the thickness of a conventional shrinkable film, namely not more than 30%, preferably not more than 20% and most preferably not more than 15%.

It is preferable that the static friction coefficient of the film according to the present invention is not more than 1.2, more preferably not more than 1.0 and most preferably from 0.2 to 1.0. When the static friction coefficient is over 1.2, blocking between the film and the bottle is caused during the shrinking treatment which hinders smooth shrinking. As a result, the film forms wrinkles after the shrinking treatment; accordingly such a film is undesirable. When the static friction coefficient of the film is less than 0.2, it is difficult to closely attach the film to the position on which the film must be attached, because the film is apt to move up and down during the shrinking treatment. Such a film is again undesirable.

The degree of crystallinity of the film according to the present invention is preferably not more than 15%, more preferably not more than 10% and still more preferably not more than 5%. It is considered that shrinking stress scarcely generates in the crystalline phase at the time of heating. However, when the degree of crystallinity of the film is over 15%, non-uniform shrinking stress generates in the film. As a result wrinkles form on the film. Accordingly, such a case is undesirable.

The breaking strength of the film according to the present invention in the main shrinking direction is preferably not less than 20 kg/mm², and more preferably not less than 25 kg/mm². In the case where the breaking strength is below 20 kg/mm², breaking of the film attached on a bottle occurs frequently during transportation of the product. Accordingly, such a case is undesirable.

When the film according to the present invention is exposed to a weathermeter according to Japanese Industrial Standards (JIS) A-1415, the time for which stretching elongation of not less than 5% in the direction perpendicular to the main shrinking direction is retained is preferably not less than 100 hours, and more preferably not less than 200 hours. When the time is below 100 hours, the weather-resistance of such a film is insufficient and such a film is undesirable.

The shrinking stress of the film according to the present invention in the main shrinking direction is preferably not less than 100 g/mm², more preferably not less than 300 g/mm² and still more preferably not less than 500 g/mm². In the case where the shrinking stress of the film is below 100g/mm², the close adhesion of the film to the bottle is insufficient; accordingly such a film is undesirable.

After keeping the film according to the present invention in an air oven at 40°C for 2 weeks, the shrinkage of the film both in the machine direction and in the transverse direction is preferably not more than 3% and more preferably not more than 2%. In the case where the shrinkage of the film is over 3%, wrinkles are generated on the film due to curling and shrinking during the storage of the film in a warehouse after film forming or printing and before attaching the film to the bottle; accordingly such a case is undesirable.

The polyester film according to the present invention, which has the above-mentioned physical properties, can be produced according to the previously described method employing an extrusion temperature of the polyester of 200 to 300°C, a stretching ratio of 1.6 to 5.0, and a stretching temperature of T_{g} - 10°C to T_{g} + 50°C (T_{g} is the glass transition temperature).

The thus obtained shrinkable film according to the present invention is produced from a cheap polymer as the raw material, has excellent colour tone and physical properties such as the shrinking property, warm water resistance and strength, and is suitable for use in labelling and packaging.

Still another preferable film, described above, having the above-mentioned physical properties according to the present invention can be produced by the previously described method in which a heat-set treatment or UV irradiation is carried out, while adopting a suitable combination of the extrusion temperature of the polyester, the rate of stretching the film and the stretching temperature of the film.

The further thus obtained preferable film according to the present invention does not have distortion during shrinking treatment at a high temperature, and accordingly the film is suitable for use on a heat-resistant PET bottle and glass bottle which require a shrinking treatment at a high temperature for a short time.

Necessary information such as a drawing and letters are printed on the film according to the present invention by conventional methods and the printed film is put on a vessel such as a PET bottle to be subjected to shrinking treatment according to the method well known in the labelling and packaging industry.

The present invention is further described in the following Examples.

Methods of evaluation of the films are as follows.

### Shrinkage A:

A specimen of the film (a strip 1 cm in width) was subjected to a shrinking treatment for 5 min in a geared oven at a temperature of 100 ± 2°C without load. The shrinkage was calculated from the formula: 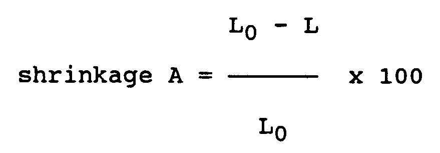
wherein L₀ is the original length of the specimen (10cm) and L is the length of the specimen after the shrinking treatment.

Furthermore, after printing a drawing on the film using a printing ink in which a 30:70 mixed solvent of methyl ethyl ketone and ethyl acetate was used, the shrinkage of the thus treated film was measured.

### Birefringence (Δn):

By using a polarizing microscope made by the Karl Zeiss Company, the retardation of the film was measured, and the birefringence (Δn) of the film was obtained according to the formula:

$\text{Δn = R/d}$

wherein R is the retardation of the film and d is the thickness of the film.

### Heat of fusion of the film (kJ/kg) (cal/g):

The area under the temperature-time curve obtained by the fusion of the film under the conditions of sensitivity of 4, temperature increasing speed of 16°C/min and chart speed of 40 mm/min using a DSC-lB machine produced by Perkin Elmer Corp. was calculated. The heat of fusion of the film was calculated according to the formula:

$\text{Heat of fusion = A.S.} \frac{\text{1}}{\text{m}}$

wherein A is the heat of fusion of indium per unit area (kJ/cm²) (cal/cm²) on the chart under the same conditions as above; S is the total area under the curve of the film and m is the weight (g) of the film.

### Shrinkage C:

A square film (10 cm sides) was subjected to a shrinking treatment for 5 s in water at a temperature of 75 ± 0.5°C without load, and the shrinkage of the film was obtained in both the machine direction and the transverse direction according to the formula: 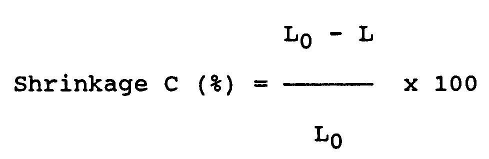
wherein L₀ is the original length of the film (10cm) and L is the length of the film after being contracted. The direction which showed the larger shrinkage was determined to be the main shrinking direction.

### Neck-in rate:

The film is cut into rectangles of not smaller than 13 cm in the main shrinking direction and 10 cm in the other direction. Both ends of the main shrinking direction were fixed to a metal frame having 13 x 10 cm inner dimensions. Thereafter, the maximum shrinkage of the film in the direction perpendicular to the main shrinking direction was obtained, and the thus obtained value was determined to be the neck-in rate.

### Distortion of the heat-sealed part:

The film was made into a cylinder by heat-sealing. After covering a glass bottle with the cylindrical film, the bottle was passed through a shrink tunnel to shrink the film. After the shrinking treatment, the case where no deformation of the drawing in the periphery of the heat-sealed part occurred was designated as o; the case where some deformation of the drawing occurred without causing practical problems was designated as Δ and the case where deformation of the drawing was severe and the film was undesirable as the label was designated as x.

### Evaluation (C) of the film as a shrinkable film:

After attaching the film as the label on to a glass bottle as above in the "Distortion of the heat-sealed part", the bottle was sterilized for 15 min in water at 85°C.

Thereafter, the appearance of the film such as wrinkles, distortion and slack and the resistance of the film against breaking at the time of transporting the film, were evaluated collectively. The case where no problem was found was designated as o; the case where there was no practical problem although some defects were found in the appearance of the film was designated as Δ and the case where the film was not suitable for practical use was designated as x.

### Breaking strength in the main shrinking direction:

A film of 15 mm width fixed to a chuck having an interval of 50 mm was stretched at 20°C and RH of 65% by a TENSILON tester made by TOYO-BALDWIN CO., (UTH-III type) at a stretching speed of 50 mm/min, and the strength of the film at the time of breaking was divided by the cross-sectional area of the original film. The thus obtained value has the units kg/mm².

### Shrinking property (3) of the film:

After forming the film into a cylinder, a PET bottle was covered with the cylindrical film and the bottle was passed through a steam shrink tunnel at a temperature of 75°C to shrink the film. After passing though the tunnel, the state of close adhesion of the film to the bottle was judged by eye, and the result was evaluated by o or x based on the degree of close adhesion.

Whether the upper end or the lower end of the film was deformed obliquely or not, or the end was distorted or not was also judged by eye, and the result of uneven shrinking was designated by o or x. As the collective evaluation, the case where the film satisfied the above two items and whitening and wrinkles were not noticed at all on the film was designated as o, and the case where the film did not satisfy was designated as x.

### Average surface roughness of the film (Ra):

The average surface roughness of the film was obtained as follows using a surface roughness meter (made by KOSAKA Laboratory Co., the model SE-3FK). The radius of the tip of the touching needle was 2 µm and the load was 30 mg.

From the curve of the cross section of film, a part with a length L (2.5 mm) was sampled out along the direction of the centre line. The curve was expressed as the roughness curve y = f(x) by assuming the centre line of the sampling part as the x-axis and the direction perpendicular to the x-axis as the y-axis. The value calculated from the following formula was represented by µm as the average surface roughness of the film. The cutoff value was 80 µm, and the Ra was measured at 5 points in the machine direction and 5 points in the transverse direction (in total, at 10 points). The mean value of the measured values was designated as the average surface roughness.

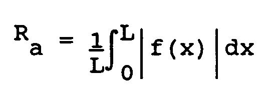

### Shrinking property (C) of the film:

After forming the film into a cylinder, a narrow necked heat-resistance PET bottle was covered with the cylindrical film and the bottle was passed through a shrink tunnel at a temperature of 95°C within 5 s to shrink the film. After passing through the tunnel, the degree of close adhesion of the film to the bottle was judged by eye and the result was evaluated by o and x based on the degree of close adhesion. Whether the upper end or the lower end of the film was deformed obliquely or not or was distorted or not was also judged by eye, and the result was evaluated as the shrinking unevenness by o and x. As the collective evaluation, the case where the film satisfied the above two items and whitening and wrinkles were not noticed at all on the film was designated as o, and the case where the film did not satisfy was designated as x.

### EXAMPLES 1 AND 2:

After preliminarily crystallizing a polyester having an intrinsic viscosity of 0.70 and a glass transition temperature of 75°C, which comprised terephthalic acid as the dicarboxylic acid component and 80 mol% of ethylene glycol and 20 mol% of neopentyl glycol as the diol component and contained 600 ppm of amorphous silica of 1.0 µm mean particle diameter, the polyester was subjected to drying by a paddle drier. The dried polyester was extruded from an extruder at 260°C. The extruded material was rapidly cooled to be an unstretched film.

The unstretched film was introduced directly into a tenter and after stretching the film by 3.0 times (Example 1) and 4.0 times (Example 2) in the transverse direction, the stretched film was rapidly cooled by air at 25°C to obtain a film of 40 µm mean thickness.

### EXAMPLE 3:

A polyester having an intrinsic viscosity of 0.69 and a glass transition temperature of 74°, which comprised terephthalic acid as the dicarboxylic acid component and 60 mol% of ethylene glycol, 38 mol% of neopentyl glycol and 2 mol% of polyethylene glycol of a molecular weight of 3,000 and which contained the same particles as in Example 1 was made into a film in the same manner as in Example 2 except for carrying out the vacuum drying of the polyester, thereby obtaining a film of 40 µm mean thickness.

The constituting components and the various physical properties of the films respectively obtained in Examples 1 to 3 are collected in Table 1.

As is seen in Table 1, the films obtained in Examples 1 to 3 fulfill the various properties which are necessary for the shrinkable film for use in labelling.

However, it was necessary to use a special method of drying such as vacuum drying in order to dry the polyester of Example 3.

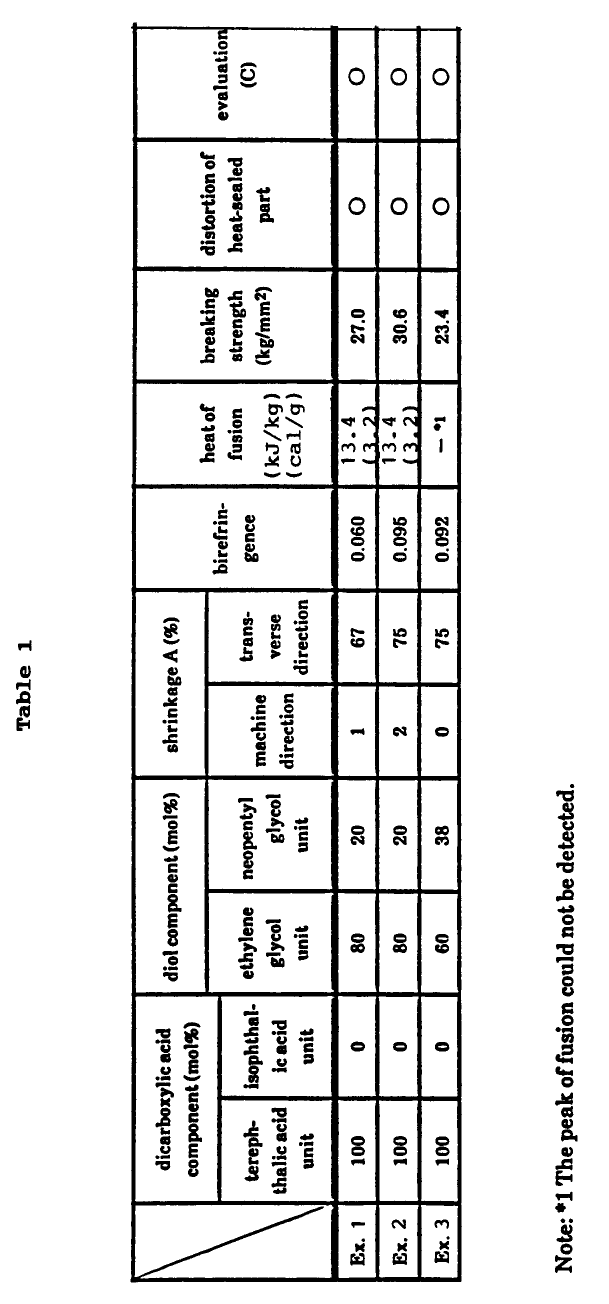

### EXAMPLE 4:

A polyester having an intrinsic viscosity of 0.72 and a glass transition temperature of 74°C, which comprised terephthalic acid as the dicarboxylic acid component and 88 mol% of ethylene glycol, 10 mol% of neopentyl glycol and 2 mol% of diethylene glycol as the diol component, was dried in a usual method using a hopper drier. The dried polyester was extruded at 270°C. The extruded polyester was rapidly cooled and solidified to obtain an unstretched film.

The unstretched film was stretched by 3.5 times in the machine direction between a stretching roll at 80°C and a cooling roll at 20°C, and the stretched film was wound up to obtain a film of 80 µm mean thickness. The heat of fusion of the film was 19.7 kJ/kg (4.7 cal/g).

The various physical properties of the film are shown in Table 2.

From the result in Table 2, it is understood that the film satisfies the required properties of the shrinkable film for use in labelling.

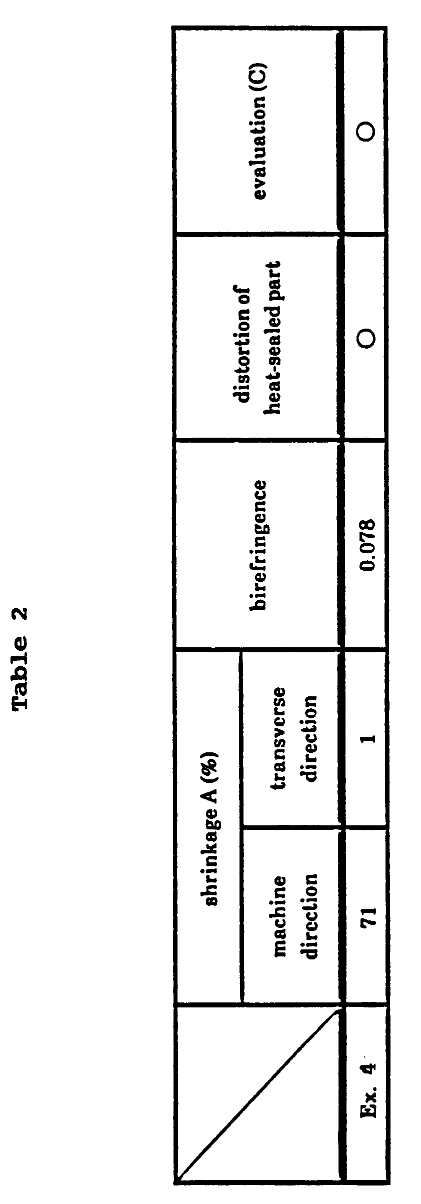

### EXAMPLE 5:

After drying a polyester having an intrinsic viscosity of 0.66 and a glass transition temperature of 75°C, which comprised terephthalic acid as the dicarboxylic acid component and 85 mol% of ethylene glycol and 15 mol% of neopentyl glycol as the diol component and which contained 300 ppm of amorphous silica of 1.2 µm mean particle diameter, in a vacuum drier, the dried polyester was extruded from an extruder at 280°C and the extruded material was rapidly cooled and solidified to obtain an unstretched film.

After stretching the unstretched film by 1.02 times into the machine direction, the stretched film was introduced into a tenter and further stretched by 3.8 times in the transverse direction while controlling the surface temperature of the film to 85°C at the beginning of the stretching and to 65°C at the end of the stretching. After the stretching, the stretched film was subjected to heat treatment for 5 s at 85°C, then cooled and wound up to obtain a film of about 30 µm mean thickness.

The physical properties of the film obtained in Example 5 and the result of evaluation of the shrinking properties of the film are shown in Table 3.

As are seen in Table 3, the film of Example 5 possesses excellent properties as a shrinkable film for use in labelling.

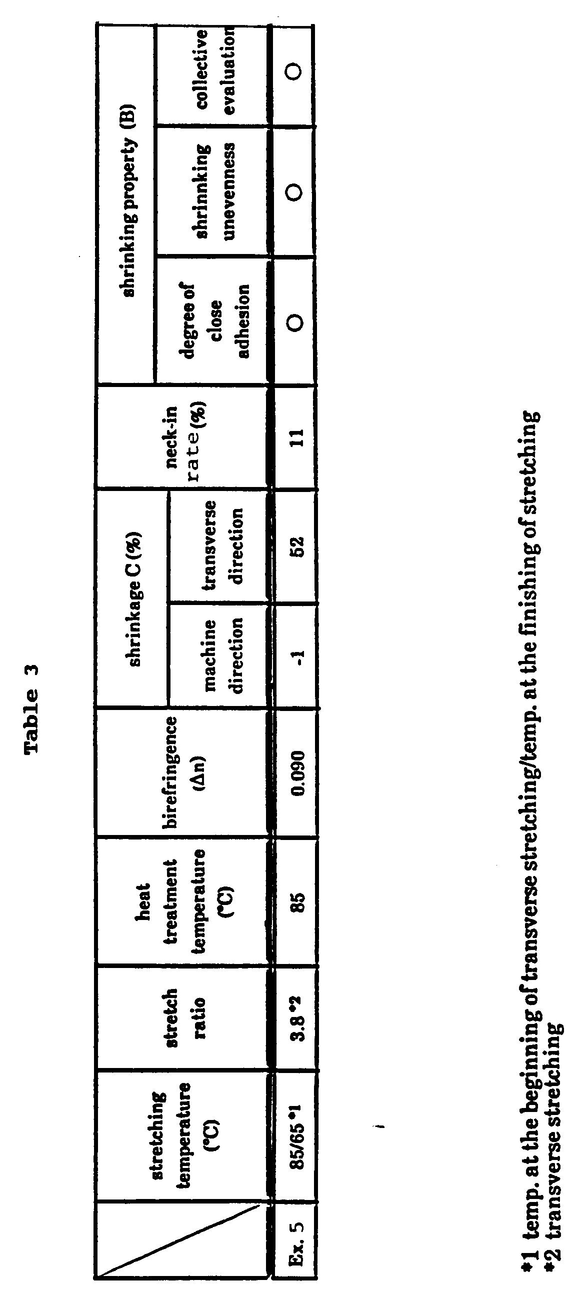

## Claims

1. A shrinkable polyester film which consists of:
(i) a polyester comprising not less than 50 mol% of ethylene terephthalate units and which has a birefringence of from 0.040 to 0.150, a shrinkage of not less than 40% in one of the machine direction and the transverse direction and a shrinkage of not more than 20% in the other of the said directions after 5 min treatment in an air oven at 100°C, a shrinkage of not less than 60% in one of the machine direction and the transverse direction and not more than 15% in the other of the said directions after 30 s treatment in water at 85°C, and a heat of fusion of not less than 8.37 kJ/kg (2 cal/g),
wherein the diol component of said polyester comprises from 50 to 97 mol% of ethylene glycol units and from 50 to 3 mol% of neopentyl glycol units, and
wherein the dicarboxylic acid component of said polyester comprises terephthalic acid units or terephthalic acid units and isophthalic acid units in a molar ratio of from 50:50 to 95:5; and
(ii) optionally, inorganic particles.

2. A film according to claim 1, wherein the film haze after immersing said film in water at 85°C from 30 min under a tensioned and fixed condition is not more than 20%.

3. A film according to claim 1 or 2, wherein the unevenness of the thickness of said film in the machine direction and the transverse direction is not more than 30% and the static friction coefficient of said film is not more than 1.2.

4. A film according to any one of the preceding claims, wherein the shrinking stress of said film in the main shrinking direction is not less than 100 g/mm² in air at 100°C.

5. A film according to any one of the preceding claims, wherein the breaking strength of said film in the main shrinking direction is not less than 20 kg/mm².

6. A film according to any one of the preceding claims, wherein the glass transition temperature of the polyester is not lower than 65°C.

7. A film according to any one of the preceding claims, wherein the shrinkage of said film after 2 weeks treatment in an air oven at 40°C is not more than 3% in both the machine direction and the transverse direction.

8. A method of applying a film to a bottle or other article, which method comprises shrinking a film as claimed in any one of the preceding claims onto the bottle or other article.

## Patentansprüche

1. Schrumpffähige Polyesterfolie, die aus folgenden Bestandteilen besteht:
(i) einem Polyester, der nicht weniger als 50 Mol-% Ethylenterephthalat-Einheiten umfaßt und der eine Doppelbrechung von 0,040 bis 0,150, eine Schrumpfung von nicht weniger als 40 % in der Maschinenrichtung oder in der Querrichtung sowie eine Schrumpfung von nicht mehr als 20 % in der anderen Richtung nach 5-minütiger Behandlung in einem Ofen an der Luft bei 100°C, eine Schrumpfung von nicht weniger als 60 % in der Maschinenrichtung oder in der Querrichtung und von nicht mehr als 15 % in der anderen Richtung nach einer 30 Sekunden dauernden Behandlung in Wasser bei 85°C und eine Schmelzwärme von nicht weniger als 8,37 kJ/kg (2 cal/g) aufweist,
wobei die Diol-Komponente des Polyesters 50 bis 97 Mol-% Ethylenglycol-Einheiten und 50 bis 3 Mol-% Neopentylglycol-Einheiten umfaßt, und
wobei die Dicarbonsäure-Komponente des Polyesters Terephthalsäure-Einheiten oder Terephthalsäure-Einheiten und Isophthalsäure-Einheiten in einem molaren Verhältnis von 50:50 bis 95:5 umfaßt; und
(ii) gegebenenfalls aus anorganischen Teilchen.

2. Folie nach Anspruch 1, wobei die Folientrübung nach 30-minütigem Eintauchen der Folie in Wasser bei 85°C in einer gespannten und fixierten Anordnung nicht mehr als 20 % beträgt.

3. Folie nach Anspruch 1 oder 2, wobei die Ungleichmäßigkeit der Dicke der Folie in der Maschinenrichtung und in der Querrichtung nicht mehr als 30 % und der Koeffizient der Haftreibung der Folie nicht mehr als 1,2 betragen.

4. Folie nach einem der vorstehenden Ansprüche, wobei die Schrumpfungsspannung der Folie in der Hauptschrumpfungsrichtung nicht weniger als 100 g/mm² an der Luft bei 100°C beträgt.

5. Folie nach einem der vorstehenden Ansprüche, wobei die Bruchfestigkeit der Folie in der Hauptschrumpfungsrichtung nicht weniger als 20 kg/mm² beträgt.

6. Folie nach einem der vorstehenden Ansprüche, wobei die Glasübergangstemperatur des Polyesters nicht weniger als 65°C beträgt.

7. Folie nach einem der vorstehenden Ansprüche, wobei die Schrumpfung der Folie nach einer 2 Wochen dauernden Behandlung in einem Ofen an der Luft bei 40°C nicht mehr als 3 % sowohl in der Maschinenrichtung als auch in der Querrichtung beträgt.

8. Verfahren zum Aufbringen einer Folie auf eine Flasche oder einen anderen Gegenstand, wobei das Verfahren das Schrumpfen einer Folie nach einem der vorstehenden Ansprüche auf die Flasche oder den anderen Gegenstand umfaßt.

## Revendications

1. Film de polyester rétractable, comprenant :
(i) un polyester ne contenant pas moins de 50 moles % de motifs téréphtalate d'éthylène et ayant un indice de biréfringence de 0,040 à 0,150, un retrait non inférieur à 40 % dans le sens machine ou la direction transversale, et un retrait non supérieur à 20 % dans l'autre de ces directions après un traitement de 5 mn dans un four à air à 100 °C, un retrait non inférieur à 60 % dans le sens machine ou la direction transversale, et pas plus de 15 % dans l'autre de ces directions après un traitement de 30 s dans l'eau à 85 °C, et une chaleur de fusion non inférieure à 8,37 kJ/kg (2 cal/g) ;
le composant dérivé de diol de ce polyester comprenant de 50 à 97 moles % de motifs éthylène glycol et de 50 à 3 moles % de motifs néopentyl glycol, et
le composant dérivé d'acide dicarboxylique de ce polyester comprenant des motifs acide téréphtalique, ou des motifs acide téréphtalique et des motifs acide isophtalique selon un rapport molaire de 50:50 à 95:5 ; et
(ii) éventuellement, des particules inorganiques.

2. Film selon la revendication 1, dans lequel le voile du film après immersion de ce film dans de l'eau à 85 °C pendant 30 mn dans un état tendu et fixe, n'est pas supérieur à 20 %.

3. Film selon la revendication 1 ou 2, dans lequel l'inégalité de l'épaisseur du film dans le sens machine et la direction transversale, n'est pas supérieure à 30 %, et le coefficient de frottement statique du film n'est pas supérieur à 1,2.

4. Film selon l'une quelconque des revendications précédentes, dans lequel la contrainte de retrait du film dans la direction de retrait principale, n'est pas inférieure à 100 g/mm² dans l'air à 100 °C.

5. Film selon l'une quelconque des revendications précédentes, dans lequel la résistance à la rupture du film dans la direction de retrait principale, n'est pas inférieure à 20 kg/mm².

6. Film selon l'une quelconque des revendications précédentes, dans lequel la température de transition vitreuse du polyester, n'est pas inférieure à 65 °C.

7. Film selon l'une quelconque des revendications précédentes, dans lequel le retrait du film après un traitement de 2 semaines dans un four à air à 40 °C, n'est pas supérieur à 3 % tant dans le sens machine que dans la direction transversale.

8. Procédé d'application d'un film sur une bouteille ou un autre article, selon lequel on rétracte un film selon l'une quelconque des revendications précédentes, sur la bouteille ou l'autre article.
